# EUROPEAN PATENT SPECIFICATION

(11) **EP 1 494 891 B1**
(45) Date of publication and mention of the grant of the patent: **24.10.2007**
(21) Application number: 03723784.9
(22) Date of filing: 19.03.2003
(51) Int. Cl.: F21V 5/00, F21V 9/16

(54) **AUTOMOTIVE HEADLAMP, LENS OR BEZEL WITH VISUAL EFFECT**
LEUCHTE, LINSE ODER INNENAUSBAU FÜR SCHEINWERFER MIT VISUELLEM EFFEKT
CACHE-FEU OU ENJOLIVEUR A EFFET VISUEL

(30) Priority: 05.04.2002 US 370790 P; 13.05.2002 US 63791
(43) Date of publication of application: 12.01.2005
(73) Proprietor: GENERAL ELECTRIC COMPANY, Schenectady, NY 12345 (US)
(72) Inventor: SCHOTTLAND, Philippe, Evansville, IN 47712 (US); BRYCE, David, S., Novi, MI 48374 (US); BOUCHARD, Thomas, 2930 Braaschaat (BE)
(74) Representative: Modiano, Micaela Nadia
(86) International application number: PCT/US2003/008555
(87) International publication number: WO 2003/086813

(56) References cited:
- WO-A-96/17012
- FR-A- 2 634 539
- FR-A- 2 673 018
- US-A- 2 798 147
- US-A1- 2001 040 811
- DATABASE WPI Section PQ, Week 199921 Derwent Publications Ltd., London, GB; Class Q71, AN 1999-250370 XP002254892 & JP 11 073804 A (TRINITY IND CORP) 16 March 1999 (1999-03-16)
- DATABASE WPI Section Ch, Week 200161 Derwent Publications Ltd., London, GB; Class A23, AN 2001-544065 XP002255056 & JP 2001 106888 A (TEIJIN KASEI LTD) 17 April 2001 (2001-04-17)

## Description

### CROSS REFERENCE TO RELATED APPLICATIONS

This application claims the benefit of US Provisional Application Serial No. 60/370,790 filed April 5, 2002, which application is incorporated herein by reference.

### BACKGROUND OF INVENTION

This application relates to lenses or bezels which may be used in lamps, particularly automotive headlamps, which provide a visual effect in the form of an aesthetic colored glow at the edges of the lens or bezel.

Automotive headlamps are highly controlled products that must meet the SAE performance standard (SAE J1383) to be commercialized. To be compliant, the combination bulb (i.e. the light source)/lens must emit a "white" color and provide enough light output (usually characterized by the total luminous flux "isocandela" and "maximum candela" point intensity testing) in a homogeneous manner. Specifications have been defined around the white beam color as presented in the SAE J578 standard. The white beam color is defined as a small portion of the color space in the CIE 1931 chromaticity diagram. The allowed portion of the color space if defined by blue, yellow, green, purple, and red boundaries that stem from the CIE 1931 x and y color coordinates. Commercially available headlamps use different types of bulbs but usually a "natural" colored lens or slightly tinted lens. In general, these lenses have a clear appearance but could display a very subtle blue or yellow tint. The most common bulb on the market is a halogen bulb. In the past few years, high performance bulbs have been introduced. These new bulbs usually referred to as HID ("High Intensity Discharge") are in fact Xenon lamps. It is well known to those of average skill in the art that the power spectral distribution of a Xenon bulb is different from a halogen bulb. For example, a Xenon bulb will emit more energy at lower wavelengths and especially in the 300 to 500 nm range that corresponds to the long UV up to violet/blue-green. As a result, the light emitted from the HID is bluer compared to a halogen bulb which will consequently appear more yellow. When mounted in a headlamp, the beam emitted from a HID/"natural" lens combination will appear whiter compared to whereas the halogen bluer. A whiter beam is commonly acknowledged as more efficient since it enhances the road visibility at night. However, there are two major disadvantages to the use of HID bulbs in headlamps. Firstly, these high performance bulbs are extremely expensive compared to halogen bulbs. As a result, headlamps based on HID bulbs are a limited market, often offered as an option on vehicles for an extra-cost in the $1,200 range. Secondly, these headlamps have a tendency to blind the drivers on the other side of the road thus potentially increasing the risk of car accident.

Automotive headlamp lenses are usually made of natural color or slightly tinted polycarbonate as a main material. The primary reasons behind the use of polycarbonate are its relatively high glass transition temperature and excellent clarity/light transmission in the visible range. Lexan® LS-2 polycarbonate is one of the leading materials currently in use for automotive lenses; including headlamp lenses, bezels and taillight lenses. Other high glass transition temperature materials are also being used including copolymers but their natural color or light transmission sometimes renders the emitted headlamp beam of a lesser quality. It is well known to those skilled in the art of coloring automotive lenses that the natural or slightly tinted polycarbonate lenses are obtained by addition of a small amount of organic colorants (i.e. dyes or pigments). For example, a blue dye is added to a yellow formulation to neutralize the color (i.e. make the polycarbonate more colorless or "natural"). The main downside of coloring is the decrease in light transmission that results from the absorption of the colorants even when they are present in the polymer matrix at a ppm loading or below. Consequently, the great majority of the lenses that are mounted in headlamps are "natural" or barely tinted.

JP-A-11073804 discloses a lens for auxiliary lamps such as head lamps and fog lamps in motor vehicles which includes a luminous light emission layer which emits light in the dark, formed on a lens body surface by mixing a transparent coating material with a luminous pigment.

JP-A-2001 106888 discloses a polycarbonate resin composition, useful as a molding material for housings of electrical and electronic instruments and lamp covers comprising a polycarbonate resin, a fluorescent dye and a partial ester of polyol and higher fatty acid(s).

US 200110040811 A1 discloses a lamp assembly having an integrated flexure member/bezel extending between a lamp lens and a housing for the lamp reflector. The flexure member has forward and rearward peripheral edges shaped to conform to the mating shapes of the lens and housing, respectively, for holding the elements together. The flexural member has internal surfaces which extend rearwardly toward the reflector surrounding the edges of the reflector such that no gaps are visually present and which can be metalized such that the overall lamp assembly has a shiny appearance.

WO 96/170,2 discloses an article exhibiting durable fluorescent properties comprising a polymeric matrix, dye, and hindered amine light stabilizer, wherein the polymeric matrix is comprised of polycarbonate and the dye is comprised of a dye selected from the group consisting essentially of thioxanthone, perylene imide and/or thioindigoid compounds-The article exhibits durable fluorescence which resists degradation by ultraviolet or visible radition. The invention is optionally combined with retroreflective elements so that the resultant article has durable fluorescent properties when exposed to sunlight and is also retroreflective. A method of manufacturing an article exhibiting durable fluorescent properties is also disclosed along with a method of increasing the durability of polycarbonate in a dyed system.

EP-A-2673018 discloses a signaling light having a photoluminescent screen which avoids black holes between flashes.

US-A-2790147 discloses an indicating device which includes: a light source; a reflector positioned to reflect the light from said source outwardly; and a lens in front of said reflector, having a first section provided with a series of light-reflecting prisms positioned and acting to diffuse and transmit outwardly directed light and to reflect inwardly directed light, and having a second section that is light transmissive and substantially non-reflecting, said second section acting to transmit inwardly directed light toward said reflector redirection outwardly through said first and second sections.

FR-A-2634539 discloses luminous device having a coloured screen doped with fluorescent elements.

### SUMMARY OF INVENTION

The present invention provides lenses and bezels for lamps that provide an appealing aesthetic look in the form of a colored glow at the edges of the lens or bezel by incorporation of a photoluminescent material in a molded polycarbonate body. The lenses are particularly suitable for use as an automotive outer lens, and can also improve the quality of the light emitted through this outer lens by interacting with the light bulb. The emitted beam is of a legal color and intensity as defined per the SAE J578 standard. The lighting performance may also be improved in such manner as reducing glare, increasing brightness or producing a beam that enhances road visibility at night to the human eye. The invention further provides assembled automobile headlamps which incorporate the outer lenses and/or bezels of the invention.

### BRIEF DESCRIPTION OF DRAWINGS

Fig. 1 shows a lamp lens in accordance with the invention.
Fig. 2 shows an exploded view of an automotive headlamp in accordance with the invention.

### DETAILED DESCRIPTION

This application relates to lenses and bezels which can be used in combination with lamps to provide an aesthetic visual effect in the form of a colored glow at the edge of the lens or bezel when the lamp is turned on. In preferred applications, the lens is constructed and sized to serve as the outer lens of an automotive headlamp with or without a bezel. Headlamps may also be made which include a bezel providing a visual effect with a conventional lens. Alternatively, the lens or bezel may be designed to fit on a flashlight or other lamp.

The lens of the present invention comprises a molded body having a generally concave outer surface, a flat or convex inner surface and an edge surface, wherein the molded body is formed from a composition comprising polycarbonate and a photoluminescent material. Light which includes light of a wavelength within the excitation spectrum of the photoluminscent material is partially absorbed and partially transmitted. The absorbed light is at least partially (depending on the quantum yield of the luminescence) emitted as light of a higher wavelength (as a result of a Stokes shift) and is conducted to a substantial extent to the edge surface of the lens thereby creating a colored visual effect at the edge of the lens. As used in the specification and claims of this application, the term "substantial extent" means in an amount effective to create an observable visual effect. Generally at least 10 % of the light emitted by photoluminenscence is conducted through the interior of the lens to the edges, preferably at least 30 %. This is achieved in polycarbonate lenses and bezels because the high index of refraction results in significant amount of internal reflection.

In the context of a lens for an automotive headlamp, various standards must be met. The lenses of the present invention light from an automotive headlamp which is of a legal color and intensity as defined per the SAE J578 standard. The lighting performance may also be improved in such manner as reducing glare, increasing brightness or producing a beam that enhances road visibility at night to the human eye. Headlamps manufactured using this invention can produce for instance a lower cost alternative to the expensive High Intensity Discharge (HID) lamps in terms of lighting performance while providing more comfort for the driver but also for the cars on the other side of the road because the blinding effect of HID lamps is not observed. In addition to the lighting performance, the headlamps also display a different aesthetic look by creating accent features in the outer lens thus allowing for product differentiation. These features are obtained by creating a synergy between the outer lens and the bulb. The lenses of the present invention are formed from a polycarbonate and one or more photoluminescent materials. As used in the specification and claims of this application, the tenn "photoluminescent material" refers to any substance that exhibits photoluminescence in response to excitation energy provided by ambient light (sunlight, room light and other artificial light sources), including without limitation organic compounds that solubilize in the plastic polymer matrix during the compounding operation, organic nanoparticle dyes (also known as "nano-colorants") and inorganic photoluminescent materials, including nanoparticles. Photoluminescence occurs when a substance absorbs radiation of a certain wavelength and re-emits photons, generally of a different and longer wavelength. When a photoluminescent molecule absorbs light, electrons are excited to a higher "excited" energy state. The molecule then loses part of its excess of energy by collisions and internal energy conversions and falls to the lowest vibrational level of the excited state. From this level, the molecule can return to any of the vibrational levels of the ground state, emitting its energy in the form of photoluminescence. Photoluminescence is a generic term which encompasses both fluorescence and phosphorescence. In the present invention, the photoluminescent materials are preferably organic fluorescent dyes because of the higher quantum yield associated with fluorescence as opposed to other types of photoluminescent processes. Preferably, the organic fluorescent dye is selected to have a quantum yield of fluorescence of at least 0.7, more preferably at least 0.8 and most preferably at least 0.9 Typically, the emission by fluorescence is an extremely brief phenomenon lasting generally between 10⁻⁴ and 10⁻⁹ seconds.

Specific non-limiting examples of fluorescent dyes that may be used in the articles of the invention are perylene derivatives, anthracene derivatives, indigoid and thioindigoid derivatives, imidazole derivatives, naphtalimide derivatives, xanthenes, thioxanthenes, coumarins, rhodamines, or (2,5-bis[5-tert-butyl-2-benzoxazolyl]thiophene) and all their derivatives. In general, very low loadings of dyes, for example less than 1.0% are used to create the effect described in this invention. In certain cases, it may be desired to have a final object with the effect of this invention but with almost no visible color (for example a "clear" water bottle). In these cases, the fluorescent dye loading can be extremely low, sometimes as low as 0.0001 %. Except for the blue/violet colors and maybe some greens, the fluorescent dye loading to retain the "clear" appearance is usually lower than 0.0005% by weight, for example from 0.0001% to 0.0003% by weight, which is enough to generate a very noticeable visual effect at the edges of the article. In the blue/violet colors, the fluorescent dye loading is significantly higher due to the fact that most of its absorption is located in the UV range. Typically, the fluorescent dye loading in this case is between 0.005% to 0.5% by weight, with 0.01 % to 0.2% being preferred and 0.03% to 0.1 % being most preferred.Nano-colorants can be obtained by various methods and usually combine the advantages of both dyes and pigments. Their light fastness compared to the corresponding dye molecule is usually greatly improved. Since their particle size is in general less than 100 nanometers, preferably less than 50 nm, and more preferably less than 10 nm, they do not scatter light conversely to most pigments used to color plastics.

Nano-colorants can be obtained by various methods. For example, dye molecules can be converted to nano-colorants by adsorption on a nano-clay particle (with or without creating a chemical bond between the nano-clay and the dye) or by nano-encapsulation in a polymer matrix (usually acrylic polymer). Note that the encapsulation method usually involves emulsion polymerization in order to form spherical nano-particles of polymer in which the dye is dispersed. Nano-colorants can be fluorescent if the dye molecule (or the inorganic compound) used to prepare the nano-colorant is fluorescent. Specific non-limiting examples of fluorescent dyes that may be employed to form nano-colorants used in the articles of the invention are perylene derivatives, anthracene derivatives, indigoid and thioindigoid derivatives, imidazole derivatives, naphtalimide derivatives, xanthenes, thioxanthenes, coumarins, rhodamines, or (2,5-bis[5-tert-butyl-2-benzoxazolyl]-thiophene) and all their derivatives.

Inorganic nano-particles may also be used as nano-colorants although their extinction coefficient is usually fairly low. Examples of fluorescent inorganic nano-particles include, but are not limited to, lanthanide complexes and chelates (for instance Europium chelates). Note that some of these inorganic nano-colorant may exhibit a larger Stokes shift than organic fluorescent colorant, i.e. emit light at a much longer wavelength than the excitation wavelength.

The fluorescent dye(s) used in the formulation of the lenses of the invention can be combined with non-fluorescent dyes in order to change the chromaticity of the edge color under daylight illumination or when the bulb is on (night time). Non-fluorescent dyes may be selected from but are not limited to the following families: azo dyes, methine dyes, pyrazolones, quinophtalones, perinones, anthraquinones, phtalocyanines and all their derivatives. The selection of the dye should maximize the synergy between the bulb used and the lens. In other words, the light emitted by the bulb (e.g. a halogen bulb) must be transformed by the lens in such a way that the desired color of visual effect is obtained with the maximum strength while the beam color complies with the SAE requirements (white color beam). By creating a synergy between the bulb and the fluorescent dyes in the lens, the beam intensity expressed by the maximum candela and the total luminous flux in the headlamp can be controlled within +/-5% of the headlamp made with a "natural" color lens. In addition, it is also possible to customize the beam color within the allowed design space defined by the SAE in the CIE 1931 chromaticity diagram. For instance, a blue lens/halogen bulb combination can exhibit a cleaner (or "whiter") beam compared to a "natural" lens. The human eye perceives this difference as a better lighting performance. It must be noted that this "whiter" illumination is a key feature of Xenon bulbs (i.e. HID lamps) but these lamps are known for their extreme blinding effect to the drivers coming on the other side of the road. The blue lens/halogen bulb combination not only exhibits a very noticeable blue visual effect but also provides a beam of a "whiter" color that constitutes a lighting performance improvement compared to "natural" color lens/halogen bulb combination. Note that the whiter beam generated with the halogen bulb does not create the same blinding effect that is observed with HID lamps. The final outer lens / bulb combination is designed to provide a beam color inside the following boundaries defined by the CIE 1931 chromaticity coordinates and preferably measured using spectrophotometric methods as presented in the ASTM standard E308-66:
x = 0.31 (blue boundary
x = 0.50 (yellow boundary)
y = 0.15 + 0.64x (green boundary)
y = 0.05 + 0.75x (purple boundary)
y = 0.44 (green boundary)
y = 0.38 (red boundary)

The dyes used in the lens composition suitably have a heat stability over 300°C, with 320°C preferred and 350°C even more preferred for automotive applications. Lower or higher temperatures may be required in other applications depending on the heating characteristics of the lamp employed with the lens. It is important to use organic dyes rather than pigments and especially rather than inorganic pigments. The reason is that pigments have a tendency to scatter light and thus increase haze in the molded lens. Pigments that either fully solubilize in the polycarbonate composition or disperse in particles that do not significantly scatter light may be acceptable at a very low loading.

The polycarbonate component of the lenses of the invention includes compositions having structural units of the formula (I) and a degree of polymerization of at least 4: 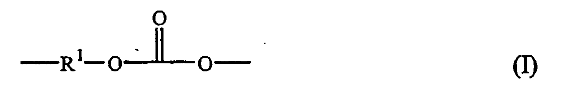 in which R1 is an aromatic organic radical. Polycarbonates can be produced, for instance, by the interfacial reaction of dihydroxy compounds. Preferably, R' is an aromatic organic radical and, more preferably, a radical of the formula (II):

-A¹-Y¹-A²- (II)

wherein each of A¹ and A² is a monocyclic divalent aryl radical and Y' is a bridging radical having zero, one, or two atoms which separate A¹ from A². In an exemplary embodiment, one atom separates A¹ from A². Ilustrative, non-limiting examples of radicals of this type are -O-, -S-, -S(O)-, -S(O₂)-, -C(O)-, methylene, cyclobexyl-methylene, 2ethylidene, isopropylidene, neopentylidene, cyclohexylidene, cyclopentadecylidene, cyclododecylidene, adamantylidene, and the like. In another embodiment, zero atoms separate A¹ from A², with an illustrative example being biphenol (OH-benzene-benzene-OH). The bridging radical Y' can be a hydrocarbon group or a saturated hydrocarbon group such as methylene, cyclohexylidene or isopropylidene.

Polycarbonates can be produced by the reaction of dihydroxy compounds in which only one atom separates A¹ and A². As used herein, the term "dihydroxy compound"includes, for example, bisphenol compounds having general formula (III) as follows: 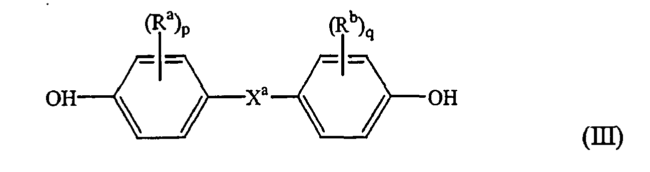 wherein R^{a} and R^{b} each independently represent hydrogen, a halogen atom, or a monovalent hydrocarbon group ; p and q are each independently integers from 0 to 4; and X^{a} represents one of the groups of formula (IV): 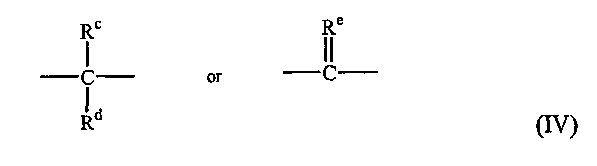 wherein R^{c} and R^{d} each independently represent a hydrogen atom or a monovalent linear or cyclic hydrocarbon group, and R^{e} is a divalent hydrocarbon group.

Some illustrative, non-limiting examples of suitable dihydroxy compounds include dihydric phenols and the dihydroxy-substituted aromatic hydrocarbons such as those disclosed by name or formula (generic or specific) in U.S. Patent No. 4,217,438. A nonexclusive list of specific examples of the types of bisphenol compounds that may be represented by formula (III) includes the following: 1,1-bis(4-hydroxyphenyl) methane; 1,1-bis(4-hydroxyphenyl) ethane; 2,2-bis(4-hydroxyphenyl) propane (hereinafter "bisphenol A"or "BPA"); 2,2-bis(4-hydroxyphenyl) butane; 2,2-bis(4-hydroxyphenyl) octane; 1,1-bis(4-hydroxyphenyl) propane; 1,1-bis(4-hydroxyphenyl) n-butane; bis(4-hydroxyphenyl) phenylmethane; 2,2-bis(4-hydroxy-1-methylphenyl) propane; 1,1-bis(4-hydroxy-t-butylphenyl) propane; bis(hydroxyaryl) alkanes such as 2,2-bis(4-hydroxy-3-bromophenyl) propane; 1,1-bis(4-hydroxyphenyl) cyclopentane; 4,4"-biphenol ;and bis(hydroxyaryl) cycloalkanes such as 1,1-bis(4-hydroxyphenyl) cyclohexane; and the like as well as combinations comprising at least one of the foregoing bisphenol compound.

It is also possible to employ polycarbonates resulting from the polymerization of two or more different dihydric phenols or a copolymer of a dihydric phenol with a glycol or with a hydroxy- or acid-terminated polyester or with a dibasic acid or with a hydroxy acid or with an aliphatic diacid in the event a carbonate copolymer rather than a homopolymer is desired for use. Generally, useful aliphatic diacids have about 2 to about 40 carbons. A preferred aliphatic diacid is dodecandioic acid.

The polycarbonate component may also include various additives ordinarily incorporated in resin compositions of this type. Such additives are, for example, fillers or reinforcing agents; heat stabilizers; antioxidants; light stabilizers; plasticizers; antistatic agents; mold releasing agents; additional resins; and blowing agents. Combinations of any of the foregoing additives may be used. Such additives may be mixed at a suitable time during the mixing of the components for forming the composition.

The outer lens is usually produced by injection molding of a polycarbonate resin composition in a compounded form. The polycarbonate formulation is usually compounded in an extruder in order to provide appropriate mixing of the composition. Although the use of a single-screw extruder is conceivable, a twin-screw extruder is usually preferred to optimize the mixing and reduce the likelihood of creating scattering particles in the final product or simply avoid potential streaking issues that may stem from undissolved high-melting point colorants such as some perylene derivatives (melting point around 300°C). Although the polycarbonate composition is generally light stabilized and the lens coated with a UV absorptive coating, it is important to use dyes that combine improved light fastness and heat stability. Good examples of fluorescent dyes with an improved light fastness and high heat stability are the perylene derivatives like the Lumogen Orange F-240, Lumogen Red F-300 and Lumogen Yellow F-083 supplied by BASF.

In order to better control the extremely low amount of dyes introduced in the formulation and therefore have a better color control of the lens, the use of volumetric or gravimetric feeders is highly recommended. The feeders can either feed a letdown of the concentrate in polycarbonate resin powder (preferably milled powder) or feed an already compounded (extruded) color masterbatch in a pellet form. The colorant loading in the letdown or the concentration of the masterbatches depends on the feeder capability, and especially the feeding rate. In general, powder letdown vary between 10:1 and 10,000:1 ratios of colorant (i.e. dye) to powder. Dye mixtures can also be used in a letdown form and fed from a single feeder although it is not the most preferred method. Poor color control may potentially result in lenses that would not be suitable for a headlamp application, i.e. beam color or light output not being compliant with the SAE standard.

Using this invention, one can produce lenses that specifically interact with HID lamps and create colorful visual effect while reducing the blinding effect. This can be obtained, for example, by using a lens containing a fluorescent dye in such manner that a part of the blue light responsible for the blinding effect is shifted to higher wavelengths where the human eye has a lower spectral sensitivity. For example, the spectral characteristics of a yellow fluorescent dye like the BASF Lumogen Yellow F-083 or a red fluorescent dye like the Lumogen Red F-300 are such that they will shift the beam color towards the yellow or red respectively thus making the beam appear less "blue" and therefore less blinding. Other combinations of visual effect lenses with less common bulbs than halogen may provide customized aesthetic effect on vehicles but also customized lighting performance. An example would be to use a lens containing fluorescent dyes that absorb wavelengths outside the visible range (e.g. below 380 nm) and reemit in the visible, in combination with a UV rich light source (as for example a HID bulb). This would translate into an increase of the visible intensity of the beam compared to the emission from the natural lens and potentially allow for a reduction of the necessary voltage thus saving some battery power.

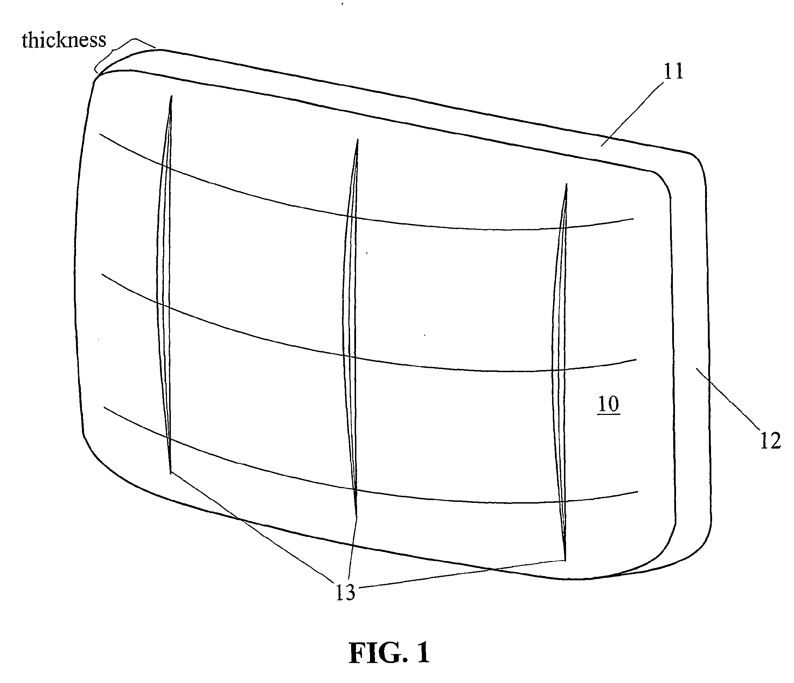

Fig. 1 shows an embodiment of a lens in accordance with the invention. The lens has an outer surface 10, which has a generally convex curvature, and an opposing rear surface 11 which may be flat or concave. The overall thickness of the lens at its edge 12 is in the range of from 0.5 to 10 mm, for example 3.0 mm. The center portion of the lens may be thicker or thinner than the edge thickness, provided that structural integrity is maintained (the necessary thickness will depend to some extent on the other dimensions of the lens), and can be variable as the result of formation of rib lines 13 which are cut into the surface. Ribs or "design features" in the lens can be protrusions or depressions. V-shapes are usually preferred for depressions. Protrusions have preferably squared tops but round tops are also possible. The overall shape of the lens may be a rounded rectangle as shown, or it may be round or ovoid or any other appropriate shape for use with a particular lamp. For example, for some automotive headlamp applications, the lens may extend around the front corner of the vehicle, spanning parts of both the front and side surfaces of the vehicle.

The present invention can also be translated to other applications than headlamps lenses, such as bezels, or lighting equipment where a synergistic combination of light source and a visual effect outer lens will offer new aesthetic solutions with comparable or improved lighting performance. Thus, the invention also provides a bezel formed from a polycarbonate resin containing an photoluminescent material. The bezel has essentially the same outer shape at the lens with which it will be used, but has a central opening. Thus, a bezel according to the invention is a substantially annular structure having a generally concave outer surface and a generally convex or flat inner surface. The surface may have ribs or grooves to facilitate assembly with the lens and housing, or for decorative purposes. The overall thickness of the bezel at its outer edge is in the range of from 0.5 to 10 mm, for example 3.0 mm.

The lenses and bezels of the invention may be treated with a surface coating to improve their utility in a specific application. For example, in the case of lenses for automotive headlamps, it is conventional to provide a surface coating of a UV absorber to extend the lifetime of otherwise UV-sensitive polycarbonate. Such UV-protective coatings may be made from acrylic or silicone-based polymers containing UV stabilizers, and are commonly applied by vapor deposition or chemical deposition. The coating is applied to at least the outer surface and edges, but may be applied to the entire exterior of the lens or bezel if desired. The lenses and bezels of the invention may also be used in other environments, for example to provide decorative effects in pool lighting, In this case, a chemically resistant coating would be used to protect the polycarbonate from degradation by pool chemicals. Alternatively, a chemically resistant polycarbonate formulation could be used.

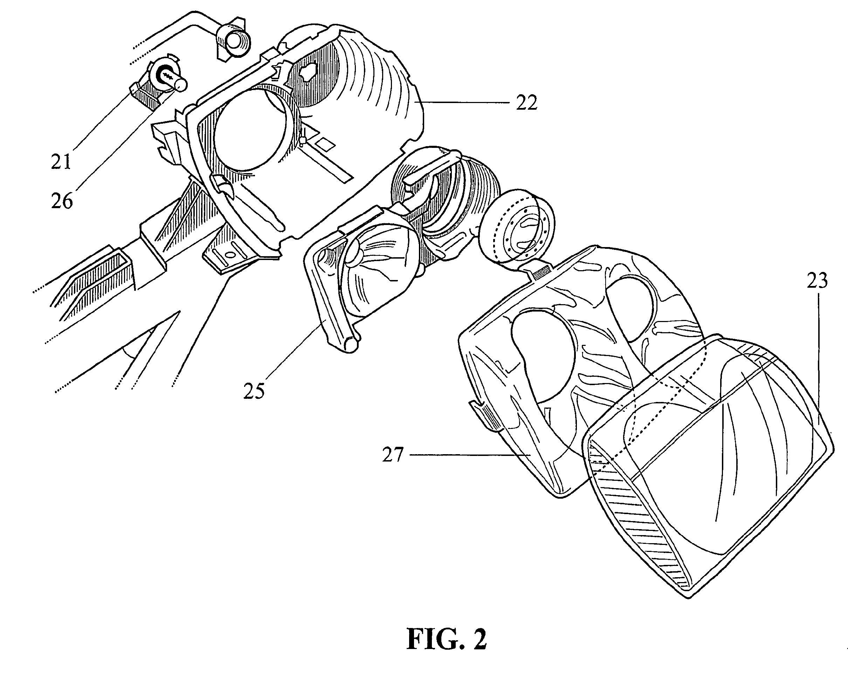

Fig. 2 shows an exploded view of a headlamp in accordance with the invention. The headlamp has a housing 22 which contains reflector assembly 25, a light source 26 and an electrical connector 21 for attachment to the electrical system of a vehicle. A bezel 27 and a lens 23 are disposed on the exterior of the housing such that light leaving the housing passes through the bezel and the lens. Either or both of the bezel 27 and the lens 23 can be made from polycarbonate including an photoluminescent material in accordance with the invention. When both the bezel 27 and the lens 23 include an organic fluorescent dye, the dye may be the same or it may be different to provide a two-color effect. It will be appreciated that Fig. 2 shows one specific headlamp design and that numerous alternatives to the actual shape and structure exist. For example, the bezel may be omitted, and the housing and reflector may be a single component.

Polycarbonate formulations (A) to (G) described below have been defined to illustrate the ability to create a broad palette of visual effect color for outer lenses. A twin-screw extruder has been used for the compounding step with standard Lexan® LS-2 polycarbonate extrusion conditions. Color chips (5.08 cm x 7.62 cm x 3.2 mm) were molded for each formulation and color coordinates were measured on the chips in transmission mode using a MacBeth 7000A spectrophotometer selecting illuminant C and a 2 degree observer.

### EXAMPLES

The invention will now be further described with reference to the following, non-limiting

### examples.

A polycarbonate resin composition (A) was prepared by mixing:
- 65 parts of poly(bisphenol-A carbonate) with an average molecular weight (M_{W}) of 29,900
- 35 parts of poly(bisphenol-A carbonate) with an average molecular weight (M_{W}) of 21,900
- 0.06 parts of tris(2,4-di-tert-butylphenyl) phosphite
- 0.27 parts of pentaerythritol tetrastearate
- 0.27 parts of 2-(2H-benzotriazol-2-yl)-4-(1,1,3,3-tetramethylbutyl)phenol
- 0.00015 parts of a yellow perylene derivative (BASF Lumogen Yellow F-083)
- 0.0001 parts of a red perylene derivative (BASF Lumogen Red F-300).

A polycarbonate resin composition (B) was prepared by mixing:
- 65 parts of poly(bisphenol-A carbonate) with an average molecular weight (M_{w}) of 29,900
- 35 parts of poly(bisphenol-A carbonate) with an average molecular weight (M_{w}) of 21,900-0.06 parts of tris(2,4-di-tert-butylphenyl) phosphite
- 0.27 parts of pentaerythritol tetrastearate
- 0.27 parts of 2-(2H-benzotriazol-2-yl)-4-(1,1,3,3-tetramethylbutyl)phenol
- 0.00015 parts of a yellow perylene derivative (BASF Lumogen Yellow F-083)
- 0.000075 parts of C.I. Pigment Blue 60 (BASF Heliogen Blue K6330).

A polycarbonate resin composition (C) was prepared by mixing:
- 65 parts of poly(bisphenol-A carbonate) with an average molecular weight (M_{w}) of 29,900
- 35 parts of poly(bisphenol-A carbonate) with an average molecular weight (M_{w}) of 21,900
- 0.06 parts of tris(2,4-di-tert-butylphenyl) phosphite
- 0.27 parts of pentaerythritol tetrastearate
- 0.27 parts of 2-(2H-benzotriazol-2-yl)-4-(1,1,3,3-tetramethylbutyl)phenol
- 0.01 parts of a naphtalimide derivative (BASF Lumogen Violet F-570)
- 0.0001 parts of C.I. Pigment Blue 60 (BASF Heliogen Blue K6330)
- 0.00005 parts of C.I. Solvent Violet 36 (Bayer Macrolex Violet 3R).

A polycarbonate resin composition (D) was prepared by mixing:
- 65 parts of poly(bisphenol-A carbonate) with an average molecular weight (M_{w}) of 29,900
- 35 parts of poly(bisphenol-A carbonate) with an average molecular weight (M_{w}) of 21,900
- 0.06 parts of tris(2,4-di-tert-butylphenyl) phosphite
- 0.27 parts of pentaerythritol tetrastearate
- 0.27 parts of 2-(2H-benzotriazol-2-yl)-4-(1,1,3,3-tetramethylbutyl)phenol
- 0.05 parts of 2,5-bis(5'-tert-butyl-2-benzoxazolyl)thiophene (Ciba Uvitex OB)
- 0.0001 parts of C.I. Pigment Blue 60 (BASF Heliogen Blue K6330)
- 0.00005 parts of C.I. Solvent Violet 36 (Bayer Macrolex Violet 3R).

A polycarbonate resin composition (E) was prepared by mixing:
- 65 parts of poly(bisphenol-A carbonate) with an average molecular weight (M_{w}) of 29,900
- 35 parts of poly(bisphenol-A carbonate) with an average molecular weight (M_{w}) of 21,900-0.06 parts of tris(2,4-di-tert-butylphenyl) phosphite
- 0.27 parts of pentaerythritol tetrastearate
- 0.27 parts of 2-(2H-benzotriazol-2-yl)-4-(1,1,3,3-tetramethylbutyl)phenol
- 0.00014 parts of a red perylene derivative (BASF Lumogen Yellow F-300).

A polycarbonate resin composition (F) was prepared by mixing:
- 65 parts of poly(bisphenol-A carbonate) with an average molecular weight (M_{w}) of 29,900
- 35 parts of poly(bisphenol-A carbonate) with an average molecular weight (M_{w}) of 21,900
- 0.06 parts of tris(2,4-di-tert-butylphenyl) phosphite
- 0.27 parts of pentaerythritol tetrastearate
- 0.27 parts of 2-(2H-benzotriazol-2-yl)-4-(1,1,3,3-tetramethylbutyl)phenol
- 0.0002 parts of an orange perylene derivative (BASF Lumogen Orange F-240).

A polycarbonate resin composition (G) was prepared by mixing:
- 65 parts of poly(bisphenol-A carbonate) with an average molecular weight (M_{w}) of 29,900
- 35 parts of poly(bisphenol-A carbonate) with an average molecular weight (M_{w}) of 21,900
- 0.06 parts of tris(2,4-di-tert-butylphenyl) phosphite
- 0.27 parts of pentaerythritol tetrastearate
- 0.27 parts of 2-(2H-benzotriazol-2-yl)-4-(1,1,3,3-tetramethylbutyl)phenol
- 0.00026 parts of a yellow perylene derivative (BASF Lumogen Yellow F-083)
- 0.00014 parts of a red perylene derivative (BASF Lumogen Red F-300)
- 0.00003 parts of an orange perylene derivative (BASF Lumogen Orange F-240)
- 0.001 parts of 2,5-bis(5'-tert-butyl-2-benzoxazolyl)thiophene (Ciba Uvitex OB)

The color coordinates and the edge color are summarized in Table 1. This provides a clear illustration of the ability to create various visual effect colors with a total visible light transmission (Y) greater than about 87% at 3.2 mm thickness (average thickness of an outer lens).

Automotive outer lenses were molded from polycarbonate formulations (A) to (E). When the lenses were incorporated in automotive headlamps, it was apparent that the headlamp beam color was white while a strongly colored visual effect was observed that shines from accent features of the lens (ribs, lines and edges).

Lenses molded from formulations (A), (D) and (E) were also combined with a halogen bulb to test SAE conformity in a headlamp configuration. Natural color Lexan® LS-2 resin was used as a reference in order to evaluate the lighting performance according to SAE J1383. The results of the isocandela testing (total flux), maximum candela (point intensity) and beam chromaticity (x,y) are summarized in Table 2. It is noteworthy that both the maximum candela and the isocandela confirm that the visual effect lenses combined to the halogen bulb give a comparable light output in terms of intensity which is within +/-5% of the reference (natural color). Moreover, headlamp with the blue lens made from formulation (D) displays a much bluer (i.e. whiter) beam compared to the reference as the CIE 1931 x chromaticity value is shifted from 0.4424 to 0.4040. This result is also confirmed by the visual evaluation of the beam color. Such combination is therefore a potential lower cost alternative to the use of HID bulbs in headlamps since it also provides a white light output that is usually perceived by the drivers as a lighting improvement.

Finally, it must be noted that all the outer lenses tested met the SAE requirements.

**Table 1:**

| **Formulation** | **Y** | **x** | **y** | **L*** | **a*** | **b*** | **Visual effect color** |
|---|---|---|---|---|---|---|---|
| A | 87.77 | 0.3170 | 0.3253 | 95.06 | -1.04 | 4.58 | Orange |
| B | 88.75 | 0.3150 | 0.3257 | 95.48 | -2.23 | 4.40 | Green |
| C | 87.70 | 0.3087 | 0.3157 | 95.04 | -0.49 | -0.41 | Blue#1 |
| D | 87.85 | 0.3105 | 0.3202 | 95.10 | -1.82 | 1.60 | Blue#2 |
| E | 87.59 | 0.3121 | 0.3166 | 94.99 | 0.8 | 0.51 | Red / Pink |
| F | 88.17 | 0.3163 | 0.3166 | 95.24 | 2.97 | 1.25 | Yellow |
| G | 86.99 | 0.3207 | 0.3292 | 94.75 | -1.06 | 6.64 | Orange / Amber |

**Table 2:**

| **Lens** | **Max.** | **Total Flux** | **x** | **y** | **SAE conformity** |
|---|---|---|---|---|---|
| "natural" LS-2 | 37979 | 754 | 0.442 | 0.407 | Pass |
| Formulation (A) | 36848 | 747 | 0.438 | 0.430 | Pass |
| Formulation (D) | 37410 | 746 | 0.404 | 0.403 | Pass |
| Formulation (E) | 36501 | 740 | 0.440 | 0.421 | Pass |

## Claims

1. An automotive headlamp comprising a housing (22) for receiving a light source (26) and an outer lens (23) and optionally a bezel (27) disposed such that light from a light source (26) disposed in the housing (22) passes through the lens (23) and through the bezel (27) when present, a reflector disposed within the housing wherein the reflector reflects light from a light source disposed within the housing toward the lens wherein the lens (23) and the bezel (27) when present comprise a polycarbonate and a photoluminescent material and provides a visual effect at least at an edge of the lens as a result of photoluminescense from the photoluminescent material, and wherein the housing, reflector, and lens work together with a light source disposed in the housing to provide an output beam from the headlamp.

2. The headlamp of claim 1, wherein the photoluminescent material is an organic fluorescent dye.

3. The headlamp of claim 2, wherein the fluorescent dye is selected from the group consisting of perylene derivatives, anthracene derivatives, indigoid and thioindigoid derivatives, imidazole derivatives, naphtalimide derivatives, xanthenes, thioxanthenes, coumarins, rhodamines, (2,5-bis[5-tert-butyl-2-benzoxazolyl]thiophene) and derivatives thereof.

4. The headlamp of claim 2 or 3, wherein the fluorescent dye is included at a concentration of 1 % or less by weight of the polycarbonate.

5. The headlamp of claim 4, wherein the fluorescent dye provides a blue or violet visual effect and the fluorescent dye is included at a concentration of 0.5 to 0.001% by weight, preferably 0.3 to 0.1% by weight, or wherein the fluorescent dye provides a red, orange or green visual effect and the fluorescent dye is included at a concentration of less than 0.0005% by weight, preferably 0.0001% to 0.0003% by weight

6. The headlamp of any of claims 2-5, wherein the fluorescent dye has a quantum yield of 0.7 or greater, preferably 0.9 or greater.

7. The headlamp of claim 1, wherein the photoluminescent material is an inorganic nanoparticle.

8. A lens comprising a photoluminescent material for use in a headlamp according to any of claims 1-7.

9. A bezel (27) comprising an annular molded body having a generally concave outer surface, a generally flat or convex inner surface and inner and outer edge surfaces, **characterized in that** the bezel comprises a photoluminescent material for use in a headlamp in accordance with any of claims 1-7.

10. A method for making a lens (10, 23) or bezel (27) having a luminescent visual effect for use in an automotive headlamp in accordance with any of claims 1-7, comprising the steps of preparing a molding composition comprising a polycarbonate and a photoluminescent material, molding the lens or bezel from the molding composition, and optionally forming cuts (13) or protrusions, or both, in a surface of the lens (10, 23) or bezel (27), wherein the step of forming the cuts (13) or protrusions can occur during or subsequent to the molding step, and wherein the luminescent visual effect occurs at least at an edge of the lens (10, 23) or bezel (27) and at cuts (13) and protrusions formed therein.

## Patentansprüche

1. Ein Fahrzeugscheinwerfer umfassend ein Gehäuse (22) zur Aufnahme einer Lichtquelle (26) und einer äußeren Linse (23) und gegebenenfalls einer Fassung (27), welche so angeordnet ist, dass Licht aus einer Lichtquelle (26), angeordnet im Gehäuse (22), durch die Linse (23) und durch die Fassung (27), sofern vorhanden, läuft, einen Reflektor, angeordnet im Gehäuse, wobei der Reflektor Licht aus einer Lichtquelle, angeordnet im Gehäuse, in Richtung der Linse reflektiert, wobei die Linse (23) und die Fassung (27), sofern vorhanden, ein Polycarbonat und ein photolumineszentes Material aufweisen und einen visuellen Effekt an wenigstens einer Kante der Linse als Ergebnis der Photoluminiszens des photolumineszenten Materials erzeugen, und wobei das Gehäuse, Reflektor und Linse mit einer Lichtquelle, angeordnet im Gehäuse, zur Bereitstellung eines Ausgangsstrahls aus dem Scheinwerfer zusammenwirken.

2. Scheinwerfer nach Anspruch 1, wobei das photolumineszente Material ein organischer Fluoreszenzfarbstoff ist.

3. Scheinwerfer nach Anspruch 2, wobei der Fluoreszensfarbstoff ausgewählt ist aus der Gruppe bestehend aus Perylenderivaten, Anthracenderivaten, Indigoid- und Thioindigoidderivaten, Imidazolderivaten, Naphthalimidderivaten, Xanthenen, Thioxanthenen, Cumarinen, Rhodaminen, (2,5-Bis[5-tert-butyl-2-benzoxazolylthiophen) und Derivaten davon.

4. Scheinwerfer nach Anspruch 2 oder 3, wobei der Fluoreszensfarbstoff in einer Konzentration von 1 Gew.-% oder weniger des Polycarbonats eingeschlossen ist.

5. Scheinwerfer nach Anspruch 4, wobei der Floureszensfarbstoff einen blauen oder violetten visuellen Effekt ergibt und der Fluoreszensfarbstoff in einer Konzentration von 0,5 bis 0,001 Gew.-% eingeschlossen ist, vorzugsweise 0,3 bis 0,1 Gew.-% oder wobei der Fluoreszensfarbstoff einen roten, orangen oder grünen visuellen Effekt ergibt und der Fluoreszensfarbstoff in einer Konzentration von weniger als 0,0005 Gew.-%, vorzugsweise 0,0001 bis 0,0003 Gew.-%, eingeschlossen ist.

6. Scheinwerfer nach einem der Ansprüche 2-5, wobei der Fluoreszensfarbstoff eine Quantenausbeute von 0,7 oder größer, vorzugsweise 0,9 oder größer, hat.

7. Scheinwerfer nach Anspruch 1, wobei das photolumineszente Material ein anorganisches Nanopartikel ist.

8. Linse aufweisend ein photolumineszentes Material zur Verwendung in einem Scheinwerfer gemäß einem der Ansprüche 1-7.

9. Eine Fassung (27) aufweisend einen kranzförmig geformten Körper, der eine generell konkave äußere Oberfläche hat, eine generell ebene oder konvexe innere Oberfläche und innere und äußere Kantenflächen, **dadurch gekennzeichnet, dass** die Fassung ein photolumineszentes Material zur Verwendung in einem Scheinwerfer gemäß einem der Ansprüche 1-7 aufweist.

10. Verfahren zur Herstellung einer Linse (10, 23) oder Fassung (27), welche einen visuellen Lumineszenseffekt haben, zur Verwendung in einem Fahrzeugscheinwerfer gemäß einem der Ansprüche 1-7, bei welchem man eine Formmasse aufweisend ein Polycarbonat und ein photolumineszentes Material herstellt, die Linse oder Fassung aus der Formmasse formt, und gegebenenfalls Ausnehmungen (13) oder Vorsprünge oder beides in einer Oberfläche der Linse (10, 23) oder der Fassung (27) formt, wobei der Schritt des Formens der Ausnehmungen (13) oder Vorsprünge während oder im Anschluss an den Formschritt erfolgen kann, und wobei der visuelle Lumineszenseffekt wenigstens an einer Kante der Linse (10, 23) oder Fassung (27) und an Ausnehmungen (13) und Vorsprüngen, die darin geformt sind, auftritt.

## Revendications

1. Phare d'automobile comprenant un boîtier (22) destiné à recevoir une source de lumière (26) et une lentille externe (23) et, en variante, un prisme (27) disposé de telle sorte que la lumière provenant d'une source de lumière (26) disposée dans le boîtier (22) passe à travers la lentille (23) et à travers le prisme (27) lorsqu'il est présent, un réflecteur disposé à l'intérieur du boîtier dans lequel le réflecteur réfléchit la lumière provenant d'une source de lumière disposée à l'intérieur du boîtier vers la lentille, dans lequel la lentille (23) et le prisme (27), lorsqu'il est présent, sont constitués en un polycarbonate et un matériau photoluminescent et assurent un effet visuel au moins au niveau d'un bord de la lentille en résultat de la photoluminescence du matériau photoluminescent, et dans lequel le boîtier, le réflecteur et la lentille servent, ensemble avec une source de lumière disposée dans le boîtier, à former un faisceau lumineux à partir du phare.

2. Phare d'automobile selon la revendication 1, dans lequel le matériau photoluminescent est un colorant fluorescent organique.

3. Phare d'automobile selon la revendication 2, dans lequel le colorant fluorescent est sélectionné à partir du groupe constitué par des dérivés de pérylène, des dérivés d'anthracène, des dérivés d'indigoïde et thioindigoïde, des dérivés d'imidazole, des dérivés de naphtalimide, des xanthènes, des thioxanthènes, des coumarines, des rhodamines, du (2,5-bis[5-tert-butyl-2-benzoxazolyl]thiophène) et des dérivés de ceux-ci.

4. Phare d'automobile selon la revendication 2 ou 3, dans lequel le colorant fluorescent est contenu en une concentration inférieure ou égale à 1 % en poids du polycarbonate.

5. Phare d'automobile selon la revendication 4, dans lequel le colorant fluorescent assure un effet visuel bleu ou violet et le colorant fluorescent est contenu en une concentration de 0,5 à 0,001 % en poids, de préférence, de 0,3 à 0,1 % en poids, ou dans lequel le colorant fluorescent produit un effet visuel rouge orange ou vert et le colorant fluorescent est contenu en une concentration inférieure à 0,0005 % en poids, de préférence, de 0,0001 % à 0,0003 % en poids.

6. Phare d'automobile selon l'une quelconque des revendications 2 à 5, dans lequel le colorant fluorescent présente un rendement quantique de 0,7 ou supérieur, de préférence, 0,9 ou supérieur.

7. Phare d'automobile selon la revendication 1, dans lequel le matériau photoluminescent est une nanoparticule inorganique.

8. Lentille constituée en un matériau photoluminescent pouvant être utilisé dans un phare selon l'une quelconque des revendications 1 à 7.

9. Prisme (27) comprenant un corps annulaire moulé présentant une surface externe sensiblement concave, une surface interne et des surfaces de bord interne et externe sensiblement plates ou convexes **caractérisé en ce que** le prisme est constitué en un matériau photoluminescent pouvant être utilisé dans un phare selon l'une quelconque des revendications 1 à 7.

10. Procédé de réalisation d'une lentille (10, 23) ou d'un prisme (27) présentant un effet visuel luminescent destiné à être utilisé dans un phare d'automobile selon l'une quelconque des revendications 1 à 7, comprenant les étapes de préparation d'une composition de moulage comprenant un polycarbonate et un matériau photoluminescent, le moulage de la lentille ou du prisme à partir de la composition de moulage, et en variante la formation de découpes (13) ou de saillies ou des deux, sur une surface de la lentille (10, 23) ou du prisme (27), dans lequel l'étape de formation de découpes (13) ou des saillies peut être réalisée au cours de l'étape de moulage ou ultérieurement, et dans lequel l'effet visuel luminescent se produit au moins au niveau d'un bord de la lentille (10, 23) ou du prisme (27) et au niveau des découpes (13) et des saillies formées sur ces derniers.
